# EUROPÄISCHE PATENTSCHRIFT

(11) **EP 3 482 462 B1**
(45) Veröffentlichungstag und Bekanntmachung des Hinweises auf die Patenterteilung: **05.08.2020**
(21) Anmeldenummer: 17745974.0
(22) Anmeldetag: 30.06.2017
(51) Int. Cl.: H01R 13/00, H01R 4/56, H01R 13/533, H01R 13/11, B60L 53/18, B60L 53/16

(54) **FLÜSSIGKEITSGEKÜHLTES KONTAKTELEMENT**
LIQUID-COOLED CONTACT ELEMENT
ÉLÉMENT DE CONTACT REFROIDI PAR LIQUIDE

(30) Priorität: 05.07.2016 DE 102016112306
(43) Veröffentlichungstag der Anmeldung: 15.05.2019
(73) Patentinhaber: HARTING Automotive GmbH, 32339 Espelkamp (DE)
(72) Erfinder: BEIMDIECK, Carsten, 49477 Ibbenbühren (DE); BRULAND, Alexander, 32369 Rahden (DE)
(86) Internationale Anmeldenummer: PCT/DE2017/100550
(87) Internationale Veröffentlichungsnummer: WO 2018/006903

(56) Entgegenhaltungen:
- US-A- 3 244 792

## Beschreibung

Die Erfindung geht aus von einem flüssigkeitsgekühlten Kontaktelement nach dem Oberbegriff des unabhängigen Anspruchs 1. Die Erfindung bezieht sich weiterhin auf einen Steckverbinder, der ein solches Kontaktelement verwendet.

Derartige Kontaktelemente werden insbesondere zur Übertragung hoher Ströme eingesetzt und beispielsweise in Ladesteckverbindern verwendet.

Bei Elektrofahrzeugen ist ein schnelles Laden notwendig, wenn sich diese Technik gegenüber herkömmlichen Fahrzeugen mit Verbrennungsmotor durchsetzen soll. Die Fahrzeuge mit Verbrennungsmotor können innerhalb von wenigen Minuten vollgetankt werden. Elektrofahrzeuge müssen hier mithalten können. Bei Schnellladevorgängen müssen besonders hohe Ströme eingesetzt werden, was zu einer starken Hitzeentwicklung bei Ladesteckverbindern führt.

### Stand der Technik

Die US 3,244,792 A zeigt ein Kontaktelement 21, 23 für ein Schweißgerät.

Auch die FR 2 723 466 A1 zeigt ein Anschlussmittel für ein Schweißgerät oder ein vergleichbares Gerät. Das Anschlussmittel besteht aus einem Verbindungsstück und einem daran angeformten Körper, wobei das Anschlussmittel einteilig bzw. einstückig ausgeführt ist. An dem Körper des Anschlussmittels ist ein Adapter über eine Schraubverbindung angeschlossen. Über den Adapter wird dem Anschlussmittel Wasser als Kühlmittel zugeführt. Das Wasser fließt in einen Hohlraum des Körpers und wird über einen weiteren, am Körper angeschraubten Adapter, wieder abgeführt.

Die DE 10 2010 050 562 B3 zeigt einen Ladesteckverbinder für Elektroautos. Die beim Ladevorgang erzeugte Erwärmung des Steckverbinders wird durch eine spiralförmige Flüssigkeitsleitung verringert, die im Wesentlichen im Griffbereich des Steckverbinders verläuft. Durch die Flüssigkeitsleitung fließt eine Kühlflüssigkeit in einem geschlossenen Kühlkreislauf.

Bei dem beschriebenen Steckverbinder wird lediglich der Steckverbinder gekühlt. Bei den Kontaktelementen und den daran angeschlossenen elektrischen Leitern kann sich im Betrieb nach wie vor Wärme stauen, was zu einem Leistungsverlust des Steckverbinders und damit verbundenen längeren Ladevorgängen führen kann.

### Aufgabenstellung

Die Aufgabe der Erfindung besteht darin ein leistungsfähiges Kontaktelement, insbesondere für den Einsatz in Ladesteckverbindern, zu generieren.

Die Aufgabe wird durch die kennzeichnenden Merkmale des unabhängigen Anspruchs 1 gelöst.

Vorteilhafte Ausgestaltungen der Erfindung sind in den Unteransprüchen angegeben.

Das erfindungsgemäße elektrische Kontaktelement ist optimal für den Einsatz in Ladesteckverbindern geeignet. Derartige Ladesteckverbinder werden beispielsweise zum Laden von Elektroautos eingesetzt.

Das Kontaktelement weist ein Kontaktteil und ein Anschlussteil auf. Das Anschlussteil ist so ausgestaltet, dass es mit einem elektrischen Leiter eines Kabels verbindbar ist. Dem Kontaktelement ist Kühlflüssigkeit zuführbar. Im Anschlussteil des Kontaktelements sind Hohlräume vorhanden in denen Kühlflüssigkeit strömen und dabei Wärme aufnehmen und abführen kann. Das Anschlussteil ist dazu mit einer Zuflussleitung für Kühlflüssigkeit verbindbar. Der elektrische Leiter und die Zuflussleitung können am Kontaktelement angeschlossen werden.

Vorteilhafterweise ist das elektrische Kontaktelement zumindest zweiteilig ausgeführt. Das Anschlussteil und das Kontaktteil werden jeweils von separaten Bauteilen gebildet. Die separaten Bauteile sind reversibel miteinander verbindbar.

Die Zweiteiligkeit hat den Vorteil, dass das Kontaktteil nach einer bestimmten Anzahl von Steckzyklen ausgewechselt werden kann, während das Anschlussteil weiter benutzt werden kann. Ein Steckverbinder ist durch den Austausch der Kontaktteile wieder sehr schnell einsetzbar. Ein weiterer Vorteil dieser Bauweise besteht darin, dass das Anschlussteil und das Kontaktteil aus verschiedenen Werkstoffen gebildet sein können. Die Werkstoffe können je nach Bedürfnis gewählt werden. Beispielsweise kann das Kontaktteil mit einer besonders gut leitenden Beschichtung, beispielsweise mit einer Silber- oder Goldlegierung, versehen sein. Für das Anschlussteil ist eine derartige Beschichtung nicht notwendig. Hier kann diese entsprechend entfallen.

In einer vorteilhaften Ausführungsform der Erfindung können das Anschlussteil und das Kontaktteil miteinander verschraubbar ausgeführt sein. Dadurch ist es möglich ein durch diverse Steckzyklen verschlissenes Kontaktteil steckseitig aus dem Steckverbinder zu entfernen und durch ein neues Kontaktteil zu ersetzen.

Vorzugsweise ist das Kontaktteil des Kontaktelements als so genannte Buchse mit bevorzugt vier oder sechs Lamellen ausgebildet. Das Anschlussteil ist im Wesentlichen zylinderförmig ausgebildet und weist einen davon axial abstehenden Hohlzylinder auf. In das Anschlussteil ist zumindest eine Öffnung, bevorzugt sind jedoch zwei, drei oder vier Öffnungen, eingebracht.

In einer vorteilhaften Variante der Erfindung sind der Hohlraum der Öffnung oder die Hohlräume der Öffnungen mit dem Hohlraum des Hohlzylinders verbunden. In die Öffnung oder in die Öffnungen des Anschlussteils ist Kühlflüssigkeit einströmbar und durch den Hohlzylinder kann die Kühlflüssigkeit wieder ausströmen. Die Kühlflüssigkeit kann hier direkt auf das Kontaktelement einwirken. Die Kühlwirkung tritt genau dort ein wo auch die Wärme im Betrieb entsteht. Daher ist die hier gezeigte Kühlung des Kontaktelements auch besonders effektiv, insbesondere dann, wenn das Kontaktelement in einem Ladesteckverbinder für Elektrofahrzeuge eingesetzt wird. Derartige Ladesteckverbinder benötigen keine zusätzliche Kühlung.

Das am erfindungsgemäßen Kontaktelement angeschlossene Kabel besteht im Querschnitt aus einer zentralen Kühlflüssigkeitsleitung. Um die Kühlflüssigkeitsleitung herum sind einzelne Leiter, hier Kupferadern, positioniert. Die Kupferadern werden von einer flüssigkeitsdichten Folie umschlossen. Auf dieser Folie liegen so genannte Pufferelemente auf, die letztendlich von einem festen Kabelmantel umschlossen sind. Die Pufferelemente sind ebenfalls hohl, so dass im Bereich zwischen flüssigkeitsdichter Folie und Kabelmantel eine Kühlflüssigkeit strömen kann.

Der Hohlzylinder verjüngt sich endseitig und weist eine Austrittsöffnung auf. Aufwärts von der Austrittsöffnung gesehen ist auf dem Hohlzylinder eine kontinuierliche Lamellenstruktur aufgebracht. Die Lamellenstruktur dient einer gut leitenden Kontaktierung zwischen einem Leiter und dem Kontaktelement.

Die Austrittsöffnung des Hohlzylinders wird in die zentrale Kühlflüssigkeitsleitung eingeschoben. Der Außendurchmesser der Austrittsöffnung und der Innendurchmesser der zentralen Kühlflüssigkeitsleitung sind dazu aufeinander abgestimmt.

Auf die Lamellenstruktur des Hohlzylinders sind die einzelnen Leiter des oben beschriebenen Kabels gelegt. Mithilfe einer Crimphülse werden die Leiter auf die Lamellenstruktur festgepresst. Die Lamellenstruktur sorgt für eine besonders gut leitende Verbindung von den Leitern mit dem Anschlussteil.

Das Kontaktelement weist eine Hülse auf, die einseitig zumindest teilweise das Anschlussteil überdeckt. Im Anschlussteil sind zwei umlaufende Nuten eingebracht, in denen jeweils ein Dichtungsring eingelegt ist. Durch die Dichtungen wird der Überlappungsbereich von Hülse und Anschlussteil mediendicht abgedichtet. Das andere Ende der Hülse verläuft auf dem Kabelmantel des Kabels. Der Innendurchmesser der Hülse und der Außendurchmesser des Kabels sind aufeinander abgestimmt. Über eine Quetschung der Hülse kann der Überlappungsbereich von Hülse und Kabel mediendicht abgedichtet werden.

Die Kühlung des erfindungsgemäßen Kontaktelements verläuft wie folgt: Die im Bereich der Pufferelemente strömende Kühlflüssigkeit gelangt zum Anschlussteil des Kontaktelements und tritt in die Öffnung oder in die Öffnungen in diesem Bereich in das Kontaktelement ein. Die Flüssigkeit ist in der Lage Wärmeenergie aufzunehmen. Über den Hohlzylinder tritt die Kühlflüssigkeit wieder aus dem Anschlussteil heraus und wird über die zentrale Kühlflüssigkeitsleitung des Kabels wieder abgeführt. Bei dem hier beschriebenen Kühlvorgang handelt es sich um einen Kreisprozess. Das Kontaktelement wird permanent mit frischer Kühlflüssigkeit umspült.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Schnittdarstellung eines Kontaktelements mit einem angeschlossenen Kabel,
- Fig. 2: eine perspektivische Explosionszeichnung des Kontaktelements mit einer Hülse auf dem Anschlussteil,
- Fig. 3: eine perspektivische Darstellung eines Kontaktteils des Kontaktelements,
- Fig. 4: eine perspektivische Darstellung eines Anschlussteils des Kontaktelements,
- Fig. 5: eine perspektivische Darstellung einer Crimphülse,

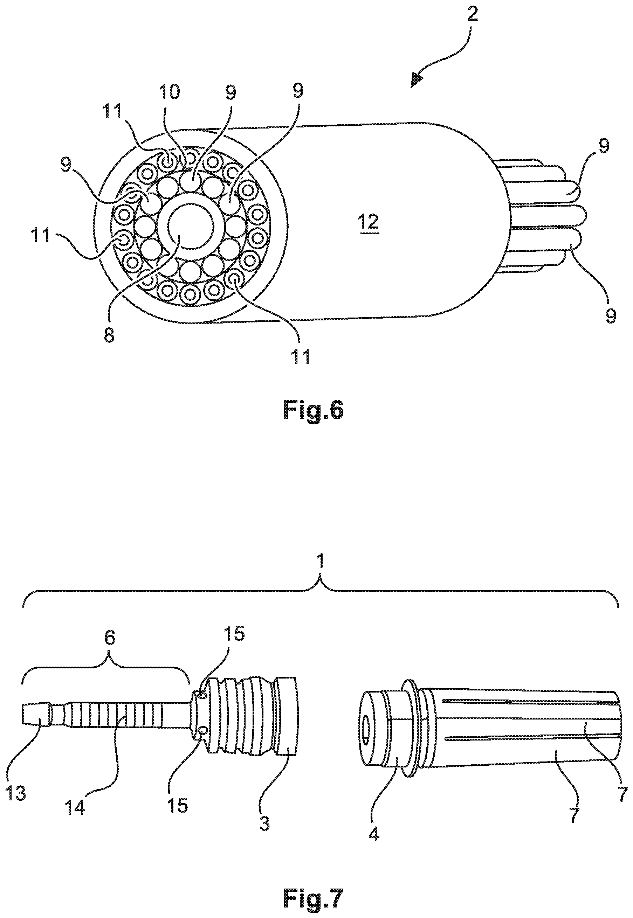

- Fig. 6: eine perspektivische Darstellung eines Kabels mit einer integrierten Kühlflüssigkeitsleitung,
- Fig. 7: eine perspektivische Explosionszeichnung des Kontaktelements,
- Fig. 8: eine perspektivische Schnittdarstellung eines Steckverbinders mit integriertem Kontaktelement,
- Fig. 9: eine perspektivische Darstellung des Kontaktelements mit angeschlossenem Kabel und einer zweiteiligen Crimphülse und
- Fig. 10: eine Schnittdarstellung des Anschlussteils.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

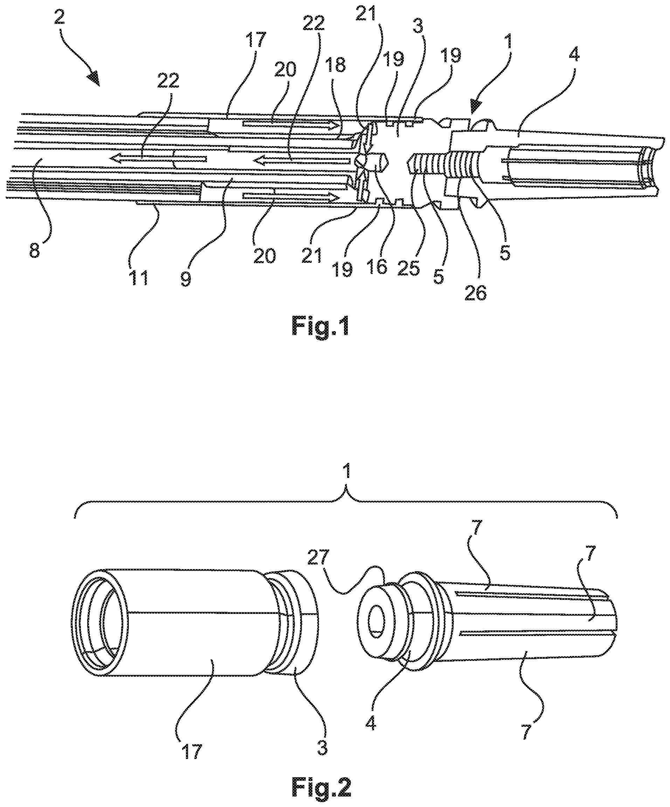

Die Figur 1 zeigt ein Kontaktelement 1, welches an ein Kabel 2 mit einer integrierten Kühlflüssigkeitsleitung elektrisch angeschlossen ist. Das Kontaktelement 1 besteht aus einem Anschlussteil 3 und einem Kontaktteil 4. Das Anschlussteil 3 enthält eine axiale Bohrung 25 und das Kontaktteil 4 enthält eine axiale Durchgangsbohrung 26. Sowohl die Bohrung 25 wie auch die Durchgangsbohrung 26 enthalten jeweils ein Innengewinde 5 und können über eine Schraube (nicht gezeigt) miteinander reversibel verbunden werden. Am Kontaktteil 4 ist eine Rändelung 27 angeformt, die eine Verdrehung zwischen Anschlussteil 3 und Kontaktteil 4 verhindert. Ist das Kontaktteil 4 nach vielen Steckzyklen verschlissen, kann ein frisches Kontaktteil 4 aufgesetzt werden, ohne das Kabel 2 erneut an das Kontaktelement 1 anschließen zu müssen. Das Kabel 2 kann permanent am Anschlussteil 3 verbleiben.

Das Kontaktteil 4 ist als so genannte Buchse mit insgesamt 6 Lamellen 7 ausgebildet. Das Anschlussteil 3 ist im Wesentlichen zylinderförmig ausgestaltet. Vom Hauptkörper axial abstehend ist ein Hohlzylinder 6 angeformt. Der Hohlzylinder 6 kann auch als Hohlnadel angesehen werden. Der Hohlzylinder 6 verjüngt sich zum Ende hin und mündet in einer Austrittsöffnung 13. Zwischen Austrittsöffnung 13 und Hauptkörper ist auf dem Hohlzylinder 6 eine Lamellenstruktur 14 aufgebracht. Im Anschlussteil 3 sind Öffnungen 15 eingebracht, die einen Zugang zu einem Hohlraum 16 innerhalb des Anschlussteils 3 bilden. Es sind mehrere Öffnungen 15 rotationssymmetrisch entlang der Mantelfläche des Anschlussteils 3 vorgesehen. Die Öffnungen 15 haben jeweils den gleichen Abstand zueinander. Der Hohlraum 16 steht ebenfalls in Verbindung mit dem Hohlraum, den der Hohlzylinder 6 bildet.

Das am Kontaktelement 1 angeschlossene Kabel 2 besteht im Querschnitt aus einer zentralen Kühlflüssigkeitsleitung 8. Um die Kühlflüssigkeitsleitung 8 herum sind einzelne Leiter 9, hier Kupferadern, positioniert. Die Kupferadern werden von einer flüssigkeitsdichten Folie 10 (aus darstellerischen Gründen nur angedeutet) umschlossen. Auf dieser Folie 10 liegen so genannte Pufferelemente 11 auf, die letztendlich von einem festen Kabelmantel 12 umschlossen sind. Die Pufferelemente 11 sind ebenfalls hohl ausgestaltet, so dass im Bereich zwischen flüssigkeitsdichter Folie 10 und Kabelmantel 12 eine Kühlflüssigkeit strömen kann. Das Kabel 2 wird über eine Hülse 17 am Kontaktelement 1 befestigt. Das Anschlussteil 3 weist zwei umlaufende Nuten 19 auf, in denen jeweils ein Dichtring (aus darstellerischen Gründen nicht gezeigt) angeordnet ist. Über die Dichtringe ist die Hülse 17 mediendicht abgedichtet.

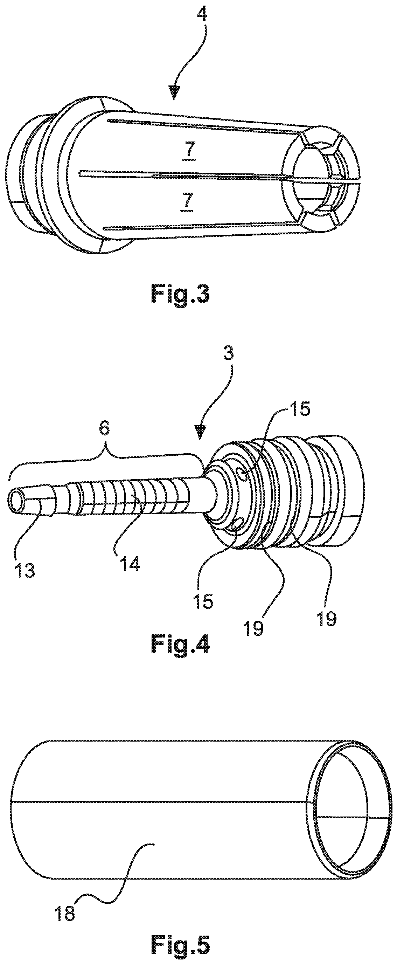

Die Austrittsöffnung 13 des Hohlzylinders 6 wird in die zentrale Kühlflüssigkeitsleitung 8 des Kabels 2 eingeschoben. Der Innendurchmesser der Kühlflüssigkeitsleitung 8 ist auf den Außendurchmesser des Hohlzylinders 6 bzw. der Austrittsöffnung 13 abgestimmt. Die Geometrie der Austrittsöffnung 13 verhindert ein Hinausrutschen des Hohlzylinders 6 aus der Kühlflüssigkeitsleitung 8. Auf der Lamellenstruktur 14 des Hohlzylinders 6 liegen die elektrischen Leiter 9 des Kabels 2 elektrisch leitend an. Über eine Crimphülse 18 (Figur 5) werden die Leiter 9 auf dem Hohlzylinder 6 befestigt. Zum Kabel 2 hin überdeckt die Crimphülse 18 einen Teil der flüssigkeitsdichten Folie 10. Zum anderen Ende dichtet die Crimphülse 18 flüssigkeitsdicht zum Hauptkörper des Anschlussteils 3 ab. Die Leiter 9 sind demnach flüssigkeitsdicht abgedichtet.

Das Anschlussteil 3 weist einen von Kühlflüssigkeit durchströmbaren Hohlraum 16 auf. Das Volumen des Hohlraums kann so eingestellt werden, dass ausreichend Wärme über die Kühlflüssigkeit abführbar ist, das Anschlussteil aber noch eine ausreichende Massivität aufweist.

Die Kühlflüssigkeit fließt kabelmantelseitig entlang des Pfeils 20 durch die Hülse 17 und von dort aus entlang des Pfeils 21 in die Öffnungen 15 des Anschlussteils 3 ein. Der Hohlraum 16 des Anschlussteils 3 wird von der Kühlflüssigkeit durchströmt. Die im Betrieb hier entstandene Wärme wird von der Kühlflüssigkeit aufgenommen und über den Hohlraum des Hohlzylinders 6 in Richtung des Pfeils 22 über die zentrale Flüssigkeitsleitung 8 wieder abtransportiert. In einem entfernten System kann die Kühlflüssigkeit wieder runtergekühlt und in einem Kreislauf wieder den Öffnungen 15 zugeführt werden.

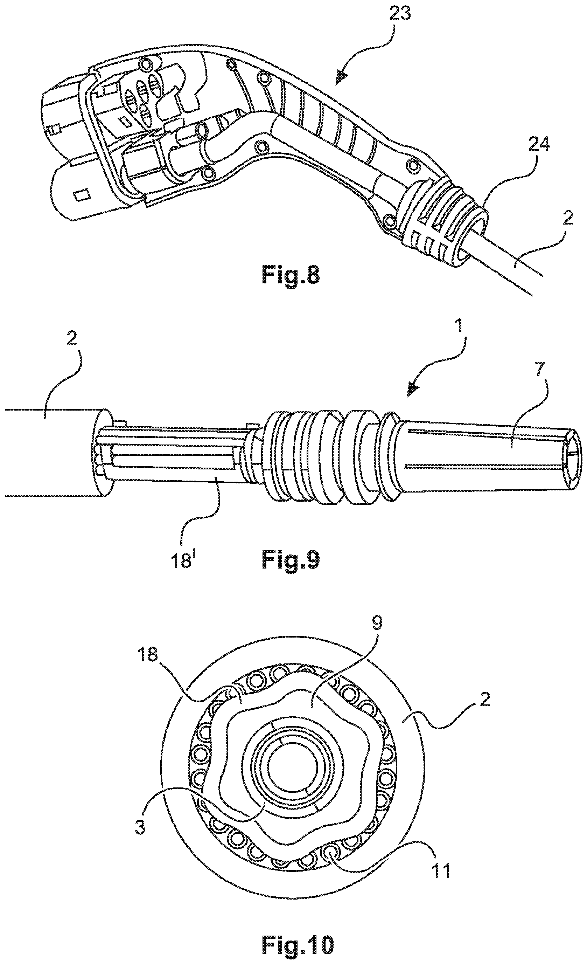

In Figur 8 ist ein geöffnetes Gehäuse eines Steckverbinders 23 gezeigt, in dem das Kontaktelement 1 eingebaut und an ein Kabel 2 angeschlossen ist. In der Regel umfasst der Steckverbinder 23 zumindest zwei Kontaktelemente 1 und auch zwei daran angeschlossene Kabel 2, die eine Kühlleitung enthalten. Der Steckverbinder 23 kann weitere nicht gekühlte Kontaktelemente (nicht gezeigt), beispielsweise für Steuersignale, enthalten, die jeweils an Kabel ohne Kühlfunktion angeschlossen sind. Die beiden Kabel 2 und weitere Kabel werden in einem flexiblen Rohr (aus darstellerischen Gründen nicht gezeigt) vereint, welches vom Kabelabgang 24 des Steckverbinders 23 abgeht.

Die Figur 9 zeigt eine alternative Ausführungsform des Kontaktelements 1 mit einem angeschlossenen, kühlflüssigkeitsführenden Kabel 2. Hier ist die Crimphülse 18' zweiteilig ausgeführt. In Figur 9 ist aus darstellerischen Gründen nur ein Teil der zweiteiligen Crimphülse 18' gezeigt.

In Figur 10 ist eine besondere Art der Vercrimpung der Crimphülse 18 dargestellt. Die Crimphülse 18 wird in eine so genannte Hex-Stern-Crimpform gebracht. Dadurch wird eine gleichmäßige und besonders gasdichte Vercrimpung erreicht. Diese Art der Vercrimpung weist außerdem sehr niedrige Widerstandswerte auf. Die einzelnen Leiter 9 werden unter der Crimphülse 18 zusammengequetscht und stehen in einem Berührkontakt untereinander. Dadurch bildet sich eine geschlossene, leitende Kupferschicht um das Anschlussteil 3 herum. Im Bereich der Pufferelemente 11 kann die Kühlflüssigkeit über die Crimphülse 18 zum Kontaktelement 1 bzw. zu dessen Anschlussteil 3 strömen.

### Bezugszeichenliste

| | | | |
|---|---|---|---|
| 1 | Kontaktelement | 15 | Öffnungen |
| 2 | Kabel | 16 | Hohlraum |
| 3 | Anschlussteil | 17 | Hülse |
| 4 | Kontaktteil | 18 | Crimphülse |
| 5 | Innengewinde | 19 | Nut |
| 6 | Hohlzylinder | 20 | Pfeil |
| 7 | Lamelle | 21 | Pfeil |
| 8 | Zentrale | 22 | Pfeil |
| | Kühlflüssigkeitsleitung | | |
| 9 | Leiter | 23 | Steckverbinder |
| 10 | Flüssigkeitsdichte | 24 | Kabelabgang |
| | Folie | | |
| 11 | Pufferelement | 25 | Bohrung |
| 12 | Kabelmantel | 26 | Durchgangsbohrung |
| 13 | Austrittsöffnung | 27 | Rändelung |
| 14 | Lamellenstruktur | | |

## Patentansprüche

1. Elektrisches Kontaktelement (1), welches ein Kontäktteil (4) und ein Anschlussteil (3) aufweist, wobei das Anschlussteil (3) mit einem elektrischen Leiter (9) eines Kabels (2) verbindbar ist, wobei dem Kontaktelement (1) Kühlflüssigkeit zuführbar ist, wobei das elektrische Kontaktelement (1) zumindest zweiteilig ausgeführt ist, und das Anschlussteil (3) und das Kontaktteil (4) jeweils als separate Bauteile ausgeführt sind, die reversibel miteinander verbindbar sind und das Anschlussteil (3) einen von Kühlflüssigkeit durchströmbaren Hohlraum (16) aufweist, wobei das Anschlussteil (3) im Wesentlichen zylinderförmig ausgebildet ist und einen Hohlzylinder (6) aufweist, **dadurch gekennzeichnet, dass** der Hohlzylinder (6) endseitig eine Austrittsöffnung (13) aufweist und sich zum Ende hin verjüngt und in der Austrittsöffnung (13) mündet und dass auf dem Hohlzylinder (6) eine Lamellenstruktur (14) aufgebracht ist.

2. Elektrisches Kontaktelement nach vorstehendem Anspruch **dadurch gekennzeichnet, dass** das Anschlussteil (3) und das Kontaktteil (4) miteinander verschraubbar sind.

3. Elektrisches Kontaktelement nach einem der vorstehenden Ansprüche **dadurch gekennzeichnet, dass** das Kontaktteil (4) als Buchse ausgebildet ist.

4. Elektrisches Kontaktelement nach vorstehendem Anspruch
**dadurch gekennzeichnet, dass**
die Buchse vier oder sechs Lamellen (7) aufweist.

5. Elektrisches Kontaktelement nach einem der vorstehenden Ansprüche
**dadurch gekennzeichnet, dass**
das Anschlussteil (3) zumindest eine Öffnung (15) aufweist.

6. Elektrisches Kontaktelement nach vorstehendem Anspruch
**dadurch gekennzeichnet, dass**
das Anschlussteil (3) zwei, drei oder vier Öffnungen (15) aufweist.

7. Elektrisches Kontaktelement nach einem der beiden vorstehenden Ansprüche
**dadurch gekennzeichnet, dass**
der Hohlraum (16) den die Öffnung (15) erschließt oder den die Öffnungen (15) erschließen mit dem Hohlraum des Hohlzylinders (6) verbunden ist.

8. Elektrisches Kontaktelement nach einem der drei vorstehenden Ansprüche
**dadurch gekennzeichnet, dass**
in die Öffnung (15) oder in die Öffnungen (15) des Anschlussteils (3) Kühlflüssigkeiteinströmbar und durch den Hohlzylinder (6) die Kühlflüssigkeit wieder ausströmbar ist.

9. Elektrisches Kontaktelement nach einem der vorstehenden Ansprüche
**dadurch gekennzeichnet, dass**
das Kontaktelement (1) eine Hülse (17) aufweist, die zumindest teilweise das Anschlussteil (3) überdeckt.

10. Steckverbinder mit zumindest einem elektrischen Kontaktelement (1) nach einem der vorstehenden Ansprüche.

11. Steckverbinder nach vorstehendem Anspruch,
**dadurch gekennzeichnet, dass**
es sich beim Steckverbinder um einen Autoladesteckverbinder handelt.

12. Steckverbinder nach einem der beiden vorstehenden Ansprüche, **dadurch gekennzeichnet, dass**
am Kontaktelement (1) zumindest ein kühlflüssigkeitsführendes Kabel (2) angeschlossen ist.

## Claims

1. An electric contact element (1) which has a contact part (4) and a connecting part (3), wherein the connecting part (3) can be connected to an electrical conductor (9) of a cable (2), wherein coolant can be conveyed to the contact element (1), **characterized in that** the electric contact element (1) has an at least two-part design and the connecting part (3) and the contact part (4) are each formed by separate components which can be reversibly connected to each other and the connecting part (3) has a cavity (16) through which coolant can flow, wherein the connecting part (3) has an essentially cylindrical design and exhibits a hollow cylinder (6), **characterized in that** the hollow cylinder (6) exhibits an outlet opening (13) at the end and tapers towards the end and opens out in an outlet opening (13) and that the hollow cylinder (6) has a blade structure (14) attached.

2. The electric contact element as claimed in the preceding claim, **characterized in that** the connecting part (3) and the contact part (4) can be screwed to each other.

3. The electric contact element as claimed in one of the preceding claims, **characterized in that** the contact part (4) is designed as a jack.

4. The electric contact element as claimed in the preceding claim, **characterized in that** the jack has four or six blades (7).

5. The electric contact element as claimed in one of the preceding claims, **characterized in that** the connecting part (3) has at least one opening (15).

6. The electric contact element as claimed in the preceding claim, **characterized in that** the connecting part (3) has two, three, or four openings (15).

7. The electric contact element as claimed in one of the two preceding claims, **characterized in that** the cavity (16) accessed by the opening (15) or accessed by the openings (15) is connected to the cavity of the hollow cylinder (6).

8. The electric contact element as claimed in one of the three preceding claims, **characterized in that** coolant can flow into the opening (15) or into the openings (15) of the connecting part (3), and the coolant can flow out again through the hollow cylinder (6).

9. The electric contact element as claimed in one of the preceding claims, **characterized in that** the contact element (1) has a sleeve (17) which at least partially covers the connecting part (3).

10. A plug connector with at least one electric contact element (1) as claimed in one of the preceding claims.

11. The plug connector as claimed in the preceding claim, **characterized in that** the plug connector is a car charging plug connector.

12. The plug connector as claimed in one of the two preceding claims, **characterized in that** at least one coolant-conducting cable (2) is connected to the contact element (1).

## Revendications

1. Élément de contact électrique (1), lequel possède une pièce de contact (4) et une pièce de raccordement (3), la pièce de raccordement (3) pouvant être reliée à un conducteur électrique (9) d'un câble (2), un liquide de refroidissement pouvant être acheminé à l'élément de contact (1), l'élément de contact (1) électrique étant réalisé au moins en deux parties et la pièce de raccordement (3) et la pièce de contact (4) étant respectivement réalisées sous la forme d'éléments structuraux séparés qui peuvent être reliés entre eux de manière réversible et la pièce de raccordement (3) possédant un espace creux (16) à travers lequel peut s'écouler un liquide de refroidissement,
la pièce de raccordement (3) étant sensiblement de forme cylindrique et possédant un cylindre creux (6), **caractérisé en ce que** le cylindre creux (6) possède une ouverture de sortie (13) du côté de l'extrémité et se rétrécit en direction de l'extrémité et débouche dans l'ouverture de sortie (13) et
**en ce qu'**une structure à lamelles (14) est appliquée sur le cylindre creux (6).

2. Élément dé contact électrique selon la revendication précédente, **caractérisé en ce que** la pièce de raccordement (3) et la pièce de contact (4) peuvent être vissées l'une avec l'autre.

3. Élément de contact électrique selon l'une des revendications précédentes, **caractérisé en ce que** la pièce de contact (4) est réalisée sous forme de-douille.

4. Élément de contact électrique selon la.revendication précédente, **caractérisé en ce que** la douille possède quatre ou six lamelles (7).

5. Élément de contact électrique selon l'une des revendications précédentes, **caractérisé en ce que** la pièce de raccordement (3) possède au moins une ouverture (15).

6. Élément de contact électrique selon l'une des revendications précédentes, **caractérisé en ce que** la pièce de raccordement (3) possède deux, trois ou quatre ouvertures (15).

7. Élément de contact électrique selon l'une des deux revendications précédentes, **caractérisé en ce que** l'espace creux (16) qu'ouvre l'ouverture (15) ou qu'ouvrent les ouvertures (15) est relié à l'espace creux du cylindre creux (6).

8. Élément de contact électrique selon l'une des trois revendications précédentes, **caractérisé en ce qu'**un liquide de refroidissement peut être injecté dans l'ouverture (15) ou dans les ouvertures (15) de la pièce de raccordement (3) et le liquide de refroidissement peut de nouveau s'écouler vers l'extérieur à travers le cylindre creux (6).

9. Élément de contact électrique selon l'une des revendications précédentes, **caractérisé en ce que** l'élément de contact (1) possède un manchon (17) qui recouvre au moins partiellement la pièce de raccordement (3).

10. Connecteur à enfichage comprenant au moins un élément de contact électrique (1) selon l'une des revendications précédentes.

11. Connecteur à enfichage selon la revendication précédente, le connecteur à enfichage étant un connecteur à enfichage de charge d'automobile.

12. Connecteur à enfichage selon l'une des deux revendications précédentes, **caractérisé en ce qu'**au moins un câble (2) conduisant un liquide est raccordé à l'élément de contact (1).
